# EUROPÄISCHE PATENTSCHRIFT

(11) **EP 1 282 765 B1**
(45) Veröffentlichungstag und Bekanntmachung des Hinweises auf die Patenterteilung: **19.11.2003**
(21) Anmeldenummer: 01943396.0
(22) Anmeldetag: 17.05.2001
(51) Int. Cl.: F02B 39/10, F02B 37/10, H02K 19/20, H02K 19/10

(54) **TURBOVERDICHTER FÜR EINEN KOLBEN-VERBRENNUNGSMOTOR**
TURBOCHARGER FOR AN INTERNAL COMBUSTION ENGINE WITH PISTONS
TURBOCOMPRESSEUR DESTINE A UN MOTEUR A COMBUSTION INTERNE A PISTONS

(30) Priorität: 17.05.2000 DE 10024390
(43) Veröffentlichungstag der Anmeldung: 12.02.2003
(73) Patentinhaber: Compact Dynamics GmbH, 82319 Starnberg (DE)
(72) Erfinder: GRÜNDL, Andreas, 81377 München (DE); HOFFMANN, Bernhard, 82319 Starnberg (DE)
(74) Vertreter: Schmidt, Steffen J., Dipl.-Ing.
(86) Internationale Anmeldenummer: EP0105665
(87) Internationale Veröffentlichungsnummer: WO01088351

(56) Entgegenhaltungen:
- DE-A- 19 938 624
- US-A- 3 576 455
- US-A- 4 769 993
- US-A- 5 638 796
- US-A- 5 652 493

## Beschreibung

### Stand der Technik

Im Stand der Technik sind Konzepte für Turboverdichter bekannt, die die zugeführte Frischluft für den Kolben-Verbrennungsmotor mittels eines Elektromotors verdichten. Allerdings sind die bisherigen Lösungsansätze nur mit erheblichen Einschränkungen für den Serieneinsatz in Kraftfahrzeugen realisierbar. Die Drehzahl eines derartigen Elektromotors muß relativ hoch sein (etwa 120.000 - 200.000 Umdrehungen pro Minute), um die erforderlichen Ladedrücke für die Kolben-Verbrennungsmotoren bereitzustellen. Diese hohen Drehzahlen bei geringen bewegten Massen, um eine hohe Dynamik bei Drehzahländerungen sicherzustellen, sowie eine ausreichende Leistung (mehrere Kilowatt für PKW-Verbrennungsmotoren) sollen mittels eines kompakt bauenden Elektromotors bereitgestellt werden. Außerdem sind die Betriebsbedingungen für den Elektromotor aufgrund der hohen Temperaturbelastungen des Turboverdichters, der Vibration des Verbrennungsmotors, an den der Turboverdichter angeschlossen ist, etc. relativ ungünstig. Schließlich ist auch die Dauerstandfestigkeit des Elektromotors und dessen kostengünstige Herstellung ebenfalls ein wesentliches Kriterium bei der Gestaltung des Turboverdichters und des darin zum Einsatz kommenden Elektromotors.

Die US 4 769 993 A und DE 199 38 624 A1 offenbaren je einen Abgasturbolader mit einer Abgasturbine, die über eine Turbinenwelle triebmäßig mit einem Kreiselverdichter verbunden ist. Die Turbinenwelle ist über eine in Antriebsrichtung sperrende Überholkupplung mit einer Verdichterwelle koppelbar. Auf der Turbinenwelle ist ein Reluktanzmotor angeordnet, dessen Rotor triebmäßig mit dem Kreiselverdichter verbunden ist.

### Der Erfindung zugrundeliegendes Problem

Der Erfindung liegt das Problem zugrunde, einen Turboverdichter für einen Kolben-Verbrennungsmotor bereitzustellen, der die oben genannten Eigenschaften aufweist um für den Groß-Serieneinsatz im Kraftfahrzeug-Bereich einsetzbar zu sein.

### Erfindungsgemäße Lösung

Zur Lösung dieses Problems lehrt die Erfindung einen Turboverdichter für einen Kolben-Verbrennungsmotor, wobei der Turboverdichter einen Frischlufteinlaß und einen Frischluftauslaß aufweist, der Turboverdichter mit dem Verbrennungsmotor über den Frischluftauslaß zu verbinden ist, der Turboverdichter eine mit einer elektrischen Maschine gekoppelte Übertragungswelle für wenigstens ein Verdichterrad aufweist, um durch die elektrische Maschine das Verdichterrad in Rotation zu versetzen, wodurch am Frischluftauslaß verdichtete Frischluft bereitgestellt wird, und wobei die elektrische Maschine eine Reluktanzmaschine ist.

Die Reluktanzmaschine des Turboverdichters weist eine den Läufer umgebende Ständeranordnung aus im wesentlichen C-förmigen Jochen auf, wobei jedes Joch zwei freie Schenkel aufweist, die jeweils soweit in Richtung des Läufers ragen, daß sie an den Stirnflächen eines Läufers angeordnete Zähne zumindest teilweise überdecken, wenn die Zähne des Läufers mit den Schenkeln der Joche fluchten.

Ein derartiger Turboverdichter erfüllt die oben genannten Anforderungen und kann dabei mit einer sehr geringen Massenträgheit des Antriebsmotors für das Verdichterrad ausgestattet werden, so daß zum Beispiel eine Drehzahländerung von etwa 5000 upm auf etwa 100.000 upm in 200 ms erfolgen kann.

In einer bevorzugten Ausführungsform des erfindungsgemäßen Turboverdichters weist die Reluktanzmaschine einen im wesentlichen kreiszylindrischen Läufer auf, der koaxial zu seiner Rotationsachse angeordnete, voneinander beabstandete Zähne aus gestapeltem Eisenblech hat. Dies erlaubt eine besonders einfache Art der Massenfertigung mit sehr guten elektrischen/magnetischen Eigenschaften.

Bei einer Variante hiervon ist der im wesentlichen kreiszylindrische Läufer durch ein spiralförmig aufgewickeltes Eisenblech gebildet, wobei koaxial zur Rotationsachse des Läufers in die Mantelfläche des Läufers Nuten eingearbeitet sind, zwischen denen die Zähne gebildet sind.
Alternativ dazu kann der im wesentlichen kreiszylindrische Läufer durch einen nicht-metallischen Tragkörper gebildet sein, in dem koaxial zur Rotationsachse des Läufers entlang des Umfangs verteilte Ausnehmungen vorgesehen sind, in die Zähne aus gestapeltem Eisenblech eingebracht sind.

Um eine möglichst steile Modulationskennlinie des magnetischen Feldes des Reluktanz-Elektromotors zu erreichen, sind einer Ausführungsform die Zähne in ihrer Längsrichtung durch quergerichtete Ausnehmungen in ihrer Längserstreckung unterbrochen.

Des weiteren weist erfindungsgemäß der Läufer eine Ständerspulenanordnung auf, die den Läufer zumindest teilweise umgibt.

Erfindungsgemäß ist der Läufer mit der Übertragungswelle für das wenigstens eine Verdichterrad drehfest verbunden.

Die so gestaltete Anordnung des Turboverdichters verwendet eine Innenläufermaschine als Antrieb. Es ist jedoch auch möglich, mit dem erfindungsgemäßen Konzept für den Turboverdichter eine Außenläufermaschine zu realisieren.

In einer weiteren Ausgestaltung des erfindungsgemäßen Gedankens wird ein Turbolader für einen Kolben-Verbrennungsmotor bereitgestellt, wobei der Turbolader einen Frischlufteinlaß und einen Frischluftauslaß aufweist, der Turbolader mit dem Verbrennungsmotor über den Frischluftauslaß zu verbinden ist, der Turbolader eine mit einer elektrischen Maschine gekoppelte Übertragungswelle für wenigstens ein Verdichterrad aufweist, um durch die elektrische Maschine das Verdichterrad in Rotation zu versetzen, wodurch am Frischluftauslaß verdichtete Frischluft für den Verbrennungsmotor bereitgestellt wird, und die elektrische Maschine eine Reluktanzmaschine ist, wobei der Turbolader zusätzlich einen Abgaseinlaß und einen Abgasauslaß aufweist, der Turbolader mit dem Verbrennungsmotor über den Abgaseinlaß zu verbinden ist, auf der mit der elektrischen Maschine gekoppelten Übertragungswelle wenigstens ein Turbinenrad angeordnet ist, das durch einen Abgasstrom aus dem Verbrennungsmotor in Rotation versetzt wird. Die Reluktanzmaschine weist eine Statoranordnung aus im wesentlichen C-förmigen Jochen auf, die jeweils soweit radial nach innen ragen, daß sie an den Stirnflächen des Läufers angeordnete Zähne zumindest teilweise überdecken, wenn die Zähne des Läufers mit den Schenkeln der Joche fluchten.

Dies ermöglicht zusätzlich zu dem Reluktanz-Elektromotorgetriebenen Betreiben ein Verbrennungsmotor-getriebenes Betreiben des erfindungsgemäßen Turboladers mit dem Abgas des Verbrennungsmotors.

Erfindungsgemäß ist dazu eine Ansteuerschaltung für die elektrische Maschine vorgesehen, die diese so ansteuert, daß bei einer niedrigen Drehzahl des Verbrennungsmotors der Turboverdichter elektro-motorenunterstützt verdichtete Frischluft für den Verbrennungsmotor bereitstellt.

Des weiteren steuert die Ansteuerschaltung für die elektrische Maschine diese so an, daß bei einer hohen Drehzahl des Verbrennungsmotors die elektrische Maschine als Generator arbeitet und elektrische Leistung bereitstellt.

Obwohl der erfindungsgemäße Turboverdichter wie er vorstehend beschrieben ist, mit dem Reluktanz-Elektromotor besonders hervorragende Eigenschaften und Vorteile hat, ist die Erfindung nicht nur auf den Turboverdichter beschränkt. Sie betrifft in gleicher Weise auch den Reluktanz-Elektromotor an sich, wie er vorstehend beschrieben ist.

Weitere Eigenschaften, Merkmale, Vorteile und Abwandlungen werden anhand der nachstehenden Beschreibung der Zeichnung deutlich, in denen Ausführungsbeispiele der Erfindung dargestellt sind.

### Kurzbeschreibung der Zeichnung

Fig. 1 zeigt eine erste Ausführungsform des erfindungsgemäßen Turboverdichters mit einem Reluktanzmotor in einer schematischen Darstellung, bei der der Turboverdichter an einen Verbrennungsmotor angeschlossen ist.

Fig. 2 zeigt eine schematische Draufsicht auf eine Stirnseite eines Läufers eines Reluktanzmotors, wie er in der Fig. 1 gezeigt ist.

Fig. 3 zeigt eine zweite Ausführungsform eines erfindungsgemässen Turboladers mit einem Reluktanzmotor in einer schematischen Darstellung, bei der der Turbolader an einen Verbrennungsmotor angeschlossen ist.

### Beschreibung einer bevorzugten Ausführungsform

In der einzigen Fig. ist eine Ausführungsform der Erfindung gezeigt, wobei an einem (lediglich schematisch veranschaulichten) Kolben-Verbrennungsmotors 10 ein erfindungsgemäßer Turboverdichter 20 vorgesehen ist. Dabei ist die Darstellung des Turboverdichters 20 im Verhältnis zu dem Kolben-Verbrennungsmotor 10 nicht maßstäblich.

Der Turboverdichter 20 hat eine Verdichterkammer 22 mit einem Frischlufteinlaß 24 und einem Frischluftauslaß 26 zur Bereitstellung von verdichteter Luft für den Verbrennungsmotor 10. Dazu ist der Lufteinlaß des Verbrennungsmotors 10 mit dem Turboverdichter 20 durch dessen Frischluftauslaß 26 verbunden. Der Turboverdichter 20 hat in der Verdichterkammer 22 ein Verdichterrad 34, das auf einer Übertragungswelle 32 drehfest angeordnet ist. Diese Übertragungswelle 32 ragt aus der Verdichterkammer 22 seitlich heraus und ist mit einer elektrischen Maschine 30 gekoppelt, um durch die elektrische Maschine 30 das Verdichterrad 34 in Rotation zu versetzen, wodurch am Frischluftauslaß 26 verdichtete Frischluft bereitgestellt wird. Die elektrische Maschine 30 des Turboverdichters 20 ist eine Reluktanzmaschine, deren Aufbau nachstehend im Detail erläutert wird.

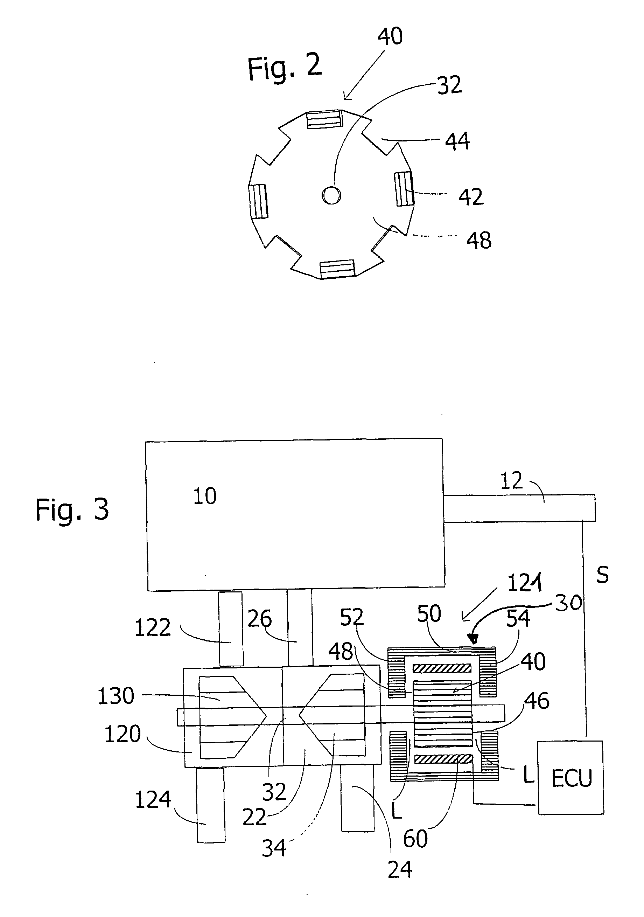

Die Reluktanzmaschine 30 hat einen im wesentlichen kreiszylindrischen Läufer 40, der koaxial zu seiner Rotationsachse (der Übertragungswelle 32) angeordnete, voneinander beabstandete Zähne 42 aus gestapeltem Eisenblech hat.
Dazu ist der Läufer 40 durch einen nicht-metallischen Tragkörper 48 gebildet, in dem koaxial zur Rotationsachse 32 des Läufers 40 entlang des Umfangs verteilte Ausnehmungen 44 vorgesehen sind, in die jeweils ein Zahn 42 aus gestapeltem Eisenblech eingebracht ist. In Fig. 2 sind der Übersicht halber nur in einigen der Ausnehmungen 44 die Zähne 42 aus gestapeltem Eisenblech dargestellt. Jeder der Zähne 42 ist so dimensioniert, daß er weder in axialer Richtung noch in radialer Richtung den kreiszylindrischen Tragkörper 48 überragt. Aus Stabilitätsgründen kann der Läufer durch eine nicht-magnetische Bandage (Edelstahl, kunststoffverstärkte Kohle- oder Glasfasern) umgeben sein, die sicherstellt, daß bei den hohen Drehzahlen des Läufers die Zähne 42 nicht aus hohen Drehzahlen des Läufers die Zähne 42 nicht aus den Ausnehmungen 44 geschleudert werden.

Die Zähne 42 können in ihrer Längsrichtung durch quergerichtete (nicht weiter dargestellte) Ausnehmungen in ihrer Längserstreckung unterbrochen sein. Damit läßt sich die für den Betrieb des Reluktanzmotors 30 wesentliche Luftspaltstrecke einstellen, ohne daß die axiale Baulänge des Reluktanzmotors 30 zunimmt.

Des weiteren hat die Reluktanzmaschine 30 eine Statoranordnung aus im wesentlichen C-förmigen Jochen 50 aus gestapeltem Eisenblech. Jedes Joch 50 ist so dimensioniert, daß es den Läufer 40 in axialer Richtung unter Bildung eines Luftspaltes L an den beiden Stirnflächen 46, 48 des Läufers 40 überragt. Dabei hat jedes Joch 50 zwei freie Schenkel 52, 54, die soweit radial nach innen ragen, und die Anzahl der Joche 50 und deren Verteilung um den Läufer 40 ist so gewählt, daß sie die Zähne 42 an den Stirnflächen 46, 48 des Läufers 40 zumindest teilweise überdecken, wenn die Zähne 42 des Läufers 40 mit den Schenkeln 52, 54 der Joche 50 fluchten.

Zwischen den Jochen 50 und dem Läufer 40 ist eine kreiszylindrische Statorspulenanordnung 60 angeordnet, durch die der Läufer 40 im Bereich seiner Mantelfläche umgeben ist.

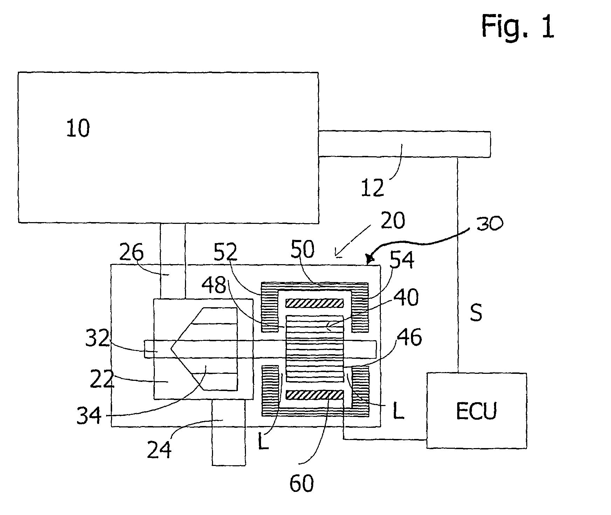

In einer weiteren, in Fig. 3 dargestellten Ausführungsform hat der Turboverdichter zusätzlich zu den in Fig. 1 gezeigten Komponenten eine Abgaskammer 120 mit einen Abgaseinlaß 122 und einem Abgasauslaß 124, so daß ein Turbolader 121 gebildet ist. Die Abgaskammer 120 ist mit dem Verbrennungsmotor 10 über den Abgaseinlaß 122 verbunden. In die Abgaskammer 120 ragt die mit der elektrischen Maschine 30 gekoppelte Übertragungswelle 32, auf der in der Abgaskammer 120 ein Turbinenrad 130 drehfest angeordnet ist, das durch einen Abgastrom aus dem Verbrennungsmotor 10 in Rotation versetzt wird. Damit kann zusätzlich zu dem elektrischen Antrieb des Verdichterrades 34 auch eine abgasbetriebene Unterstützung erfolgen.

Um das Zusammenspiel des Turboverdichters 20, 121 mit dem Verbrennungsmotor 10 im Betrieb des Verbrennungsmotors 10 koordiniert zu bewerkstelligen, dient eine Ansteuerschaltung ECU für die elektrische Maschine 30. Diese Ansteuerschaltung ECU steuert in Abhängigkeit von einem Drehzahlsignal S von der Abtriebswelle 12 des Verbrennungsmotors 10 die elektrische Maschine 30 so an, daß insbesondere bei einer niedrigen Drehzahl des Verbrennungsmotors 10 der Turboverdichter 20, 121 elektromotorenunterstützt verdichtete Frischluft für den Verbrennungsmotor 10 bereitstellt. Bei der Ausführungsform nach Fig. 3 kann die Ansteuerschaltung ECU auch so gestaltet sein, daß neben der abgasunterstützten Rotation des Verdichterrades 34 bei einer hohen Drehzahl des Verbrennungsmotors 10 die elektrische Maschine 30 als Generator arbeitet und elektrische Leistung bereitstellt.

## Patentansprüche

1. Ein Turboverdichter (20, 121) für einen Kolben-Verbrennungsmotor (10), wobei
- der Turboverdichter (20, 121) einen Frischlufteinlaß (24) und einen Frischluftauslaß (26) aufweist,
- der Turboverdichter (20, 121) mit dem Verbrennungsmotor (10) über den Frischluftauslaß (26) zu verbinden ist,
- der Turboverdichter (20, 121) eine mit einer elektrischen Maschine (30) gekoppelte Übertragungswelle (32) für wenigstens ein Verdichterrad (34) aufweist, um durch die elektrische Maschine (30) das Verdichterrad (34) in Rotation zu versetzen, wodurch am Frischluftauslaß (26) verdichtete Frischluft für den Verbrennungsmotor (10) bereitgestellt wird, und wobei
- die elektrische Maschine (30) eine Reluktanzmaschine ist,
**dadurch gekennzeichnet, daß**
- die Reluktanzmaschine (30) eine Statoranordnung aus im wesentlichen C-förmigen Jochen (50) aufweist, wobei jedes Joch (50) zwei freie Schenkel (52, 54) aufweist, die jeweils soweit radial nach innen ragen, daß sie an Stirnflächen (46, 48) eines Läufers (40) angeordnete Zähne (42) zumindest teilweise überdecken, wenn die Zähne (42) des Läufers (40) mit den Schenkeln (52, 54) der Joche (50) fluchten.

2. Der Turboverdichter (20, 120) nach Anspruch 1 **dadurch gekennzeichnet, daß**
- die Reluktanzmaschine (30) einen im wesentlichen kreiszylindrischen Läufer (40) aufweist, der koaxial zu seiner Rotationsachse (32) angeordnete, voneinander beabstandete Zähne (42) aus gestapeltem Eisenblech hat.

3. Der Turboverdichter nach Anspruch 2, **dadurch gekennzeichnet, daß**
- der im wesentlichen kreiszylindrische Läufer (40) durch ein spiralförmig aufgewickeltes Eisenblech gebildet ist und
- koaxial zur Rotationsachse des Läufers (40) in die Mantelfläche des Läufers (40) Nuten (44) eingearbeitet sind, zwischen denen die Zähne (42) gebildet sind.

4. Der Turboverdichter nach Anspruch 2, **dadurch gekennzeichnet, daß**
- der im wesentlichen kreiszylindrische Läufer (40) durch einen nicht-metallischen Tragkörper (48) gebildet ist, der koaxial zu seiner Rotationsachse Zähne (42) aus gestapeltem Eisenblech aufweist.

5. Der Turboverdichter nach Anspruch 2, **dadurch gekennzeichnet, daß**
- die Zähne (42) in ihrer Längsrichtung durch quergerichtete Ausnehmungen in ihrer Längserstreckung unterbrochen sind.

6. Der Turboverdichter nach Anspruch 2, **dadurch gekennzeichnet, daß**
- der Läufer (40) durch eine Statorspulenanordnung (60) zumindest teilweise umgeben ist.

7. Der Turboverdichter nach Anspruch 1, **dadurch gekennzeichnet, daß**
- der Läufer (40) mit der Übertragungswelle (32) für das wenigstens eine Verdichterrad (34) drehfest verbunden ist.

8. Ein Turbolader (121) für einen Kolben-Verbrennungsmotor (10), wobei
- der Turbolader (121) einen Frischlufteinlaß (24) und einen Frischluftauslaß (26) aufweist,
- der Turbolader (121) mit dem Verbrennungsmotor (10) über den Frischluftauslaß (26) zu verbinden ist,
- der Turbolader (121) eine mit einer elektrischen Maschine (30) gekoppelte Übertragungswelle (32) für wenigstens ein Verdichterrad (34) aufweist, um durch die elektrische Maschine (30) das Verdichterrad (34) in Rotation zu versetzen, wodurch am Frischluftauslaß (26) verdichtete Frischluft für den Verbrennungsmotor (10) bereitgestellt wird, und
- die elektrische Maschine (30) eine Reluktanzmaschine ist, wobei
- der Turbolader (121) zusätzlich einen Abgaseinlaß (122) und einen Abgasauslaß (124) aufweist,
- der Turbolader (121) mit dem Verbrennungsmotor (10) über den Abgaseinlaß (122) zu verbinden ist, und
- auf der mit der elektrischen Maschine (30) gekoppelten Übertragungswelle (32) wenigstens ein Turbinenrad (130) angeordnet ist, das durch einen Abgasstrom aus dem Verbrennungsmotor (10) in Rotation versetzt wird, **dadurch gekennzeichnet, daß**
- die Reluktanzmaschine (30) eine Statoranordnung aus im wesentlichen C-förmigen Jochen (50) aufweist, wobei jedes Joch (50) zwei freie Schenkel (52, 54) aufweist, die jeweils soweit radial nach innen ragen, daß sie an Stirnflächen (46, 48) eines Läufers (40) angeordnete Zähne (42) zumindest teilweise überdecken, wenn die Zähne (42) des Läufers (40) mit den Schenkeln (52, 54) der Joche (50) fluchten.

9. Der Turboverdichter nach Anspruch 1, **dadurch gekennzeichnet, daß**
- eine Ansteuerschaltung (ECU) für die elektrische Maschine (30) vorgesehen ist, die diese so ansteuert, daß bei einer niedrigen Drehzahl des Verbrennungsmotors (10) der Turboverdichter (20, 121) elektromotorenunterstützt verdichtete Frischluft für den Verbrennungsmotor (10) bereitstellt.

10. Der Turbolader nach Anspruch 8, **dadurch gekennzeichnet, daß**
- eine Ansteuerschaltung (ECU) für die elektrische Maschine (30) vorgesehen ist, die diese so ansteuert, daß bei einer hohen Drehzahl des Verbrennungsmotors (10) die elektrische Maschine (30) als Generator arbeitet und elektrische Leistung bereitstellt.

## Claims

1. A turbo-compressor (20, 121) for a piston combustion engine (10), with
- the turbo-compressor (20, 121) comprising a fresh air inlet (24) and a fresh air outlet (26),
- with the turbo-compressor (20, 121) to be connected with the combustion engine (10) via the fresh air outlet (26),
- the turbo-compressor (20, 121) comprising a transmission shaft (32) coupled with an electric machine (30) for at least one compressor wheel (34), in order to set the compressor wheel (34) in rotation by means of the electric machine (30), whereby compressed fresh air is provided at the fresh air outlet (26) for the combustion engine (10) and with
- the electric machine (30) being a reluctance machine,
**characterised in that**
- the reluctance machine (30) comprises a stator arrangement of essentially C-shaped yokes (50), with each yoke (50) comprising two free legs (52, 54) which protrude so far radially inwards that they at least partially cover teeth (42) arranged at faces (46, 48) of a rotor (40), if the teeth (42) of the rotor (40) are in alignment with the (legs 52, 54) of the yokes (50).

2. The turbo-compressor (20, 121) according to Claim 1, **characterised in that**
- the reluctance machine (30) comprises an essentially circular cylindrical rotor (40) which has spaced teeth (42) made from stacked iron sheet, arranged coaxially with its axis of rotation (32).

3. The turbo-compressor according to Claim 2, **characterised in that**
- the essentially circular cylindrical rotor (40) is formed from a spirally wound iron sheet, and
- grooves (44) are machined coaxially to the axis of rotation of the rotor (40) into the casing surface of the rotor (40), between which the teeth (42) are formed.

4. The turbo-compressor according to Claim 2, **characterised in that**
- the essentially circular cylindrical rotor (40) is formed by a non-metallic carrier body (48) which comprises teeth (42) made from stacked iron sheet, arranged coaxially with its axis of rotation.

5. The turbo-compressor according to Claim 2, **characterised in that**
- the teeth (42) are interrupted in their longitudinal direction by transversely oriented recesses.

6. The turbo-compressor according to Claim 2, **characterised in that**
- the rotor (40) is at least partially encompassed by a stator coil arrangement (60).

7. The turbo-compressor according to Claim 1, **characterised in that**
- the rotor (40) is connected locked against rotation with the transmission shaft (32) for the at least one compressor wheel (34).

8. A turbocharger (121) for a piston combustion engine (10), with
- the turbocharger (121) comprising a fresh air inlet (24) and a fresh air outlet (26),
- with the turbocharger (121) to be connected with the combustion engine (10) via the fresh air outlet (26),
- the turbocharger (121) comprising a transmission shaft (32) coupled with an electric machine (30) for at least one compressor wheel (34), in order to set the compressor wheel (34) in rotation by means of the electric machine (30), whereby compressed fresh air is provided at the fresh air outlet (26) for the combustion engine (10) and with
- the electric machine (30) being a reluctance machine, with
- the turbocharger (121) additionally comprising an exhaust gas inlet (122) and an exhaust gas outlet (124),
- the turbocharger (121) to be connected with the combustion engine (10) via the exhaust gas inlet (122), and
- at least one turbine wheel (130) being arranged on the transmission shaft (32) coupled with the electric machine (30), which is set in rotation by an exhaust gas flow from the combustion engine (10), **characterised in that**
- the reluctance machine (30) comprises a stator arrangement of essentially C-shaped yokes (50), with each yoke (50) comprising two free legs (52, 54) which protrude so far radially inwards that they at least partially cover teeth (42) arranged at faces (46, 48) of a rotor (40), if the teeth (42) of the rotor (40) are in alignment with the (legs 52, 54) of the yokes (50).

9. The turbo-compressor according to Claim 1, **characterised in that**
- a control circuit (ECU) for the electric machine (30) is provided which controls same in such a manner that, at a low speed of the combustion engine (10), the turbo-compressor (20, 121) provides compressed fresh air for the combustion engine (10) while supported by the electric motor.

10. The turbocharger according to Claim 8, , **characterised in that**
- a control circuit (ECU) for the electric machine (30) is provided which controls same in such a manner that, at a high speed of the combustion engine (10), the electric machine (30) operates as a generator and provides electric power.

## Revendications

1. Turbocompresseur (20, 121) pour un moteur à combustion interne à pistons (10),
- le turbocompresseur (20, 121) présentant une entrée d'air frais (24) et une sortie d'air frais (26),
- le turbocompresseur (20, 121) devant être relié au moteur à combustion interne (10) via la sortie d'air frais (26),
- le turbocompresseur (20, 121) présentant un arbre de transmission (32), accouplé à une machine électrique (30), pour au moins une roue de compresseur (34) pour mettre en rotation la roue du compresseur (34) par la machine électrique (30), ce qui met à disposition de l'air frais comprimé pour le moteur à combustion interne (10) au niveau de la sortie d'air frais (26), et
- la machine électrique (30) étant une machine à réluctance,
**caractérisé en ce que** :
- la machine à réluctance (30) présente un agencement de stator se composant de culasses (50) essentiellement en forme de C, chaque culasse (50) présentant deux bras libres (52, 54) qui dépassent chacun radialement vers l'intérieur aussi loin qu'ils recouvrent au moins partiellement des dents (42) agencées sur des surfaces frontales (46, 48) d'un induit (40) lorsque les dents (42) de l'induit (40) sont en alignement avec les bras (52, 54) des culasses (50).

2. Turbocompresseur (20, 121) selon la revendication 1, **caractérisé en ce que** la machine à réluctance (30) présente un induit (40) essentiellement cylindrique circulaire qui est muni de dents (42) en tôle de fer empilées, agencées à distance les unes des autres coaxialement à son axe de rotation (32).

3. Turbocompresseur selon la revendication 2, **caractérisé en ce que** :
- l'induit (40) essentiellement cylindrique circulaire est formé par une tôle de fer enroulée en forme de spirale ; et
- des rainures (44) entre lesquelles les dents (42) sont formées, sont ménagées dans la surface enveloppe de l'induit (40), coaxialement à l'axe de rotation de l'induit (40).

4. Turbocompresseur selon la revendication 2, **caractérisé en ce que** l'induit (40) essentiellement cylindrique circulaire est formé par un corps portant non métallique (48) qui présente des dents (42) en tôle de fer empilées coaxialement à son axe de rotation.

5. Turbocompresseur selon la revendication 2, **caractérisé en ce que** les dents (42) sont interrompues dans leur extension longitudinale par des évidements dirigés transversalement.

6. Turbocompresseur selon la revendication 2, **caractérisé en ce que** l'induit (40) est entouré au moins partiellement par un agencement formant bobine de stator (60).

7. Turbocompresseur selon la revendication 1, **caractérisé en ce que** l'induit (40) est relié solidaire en rotation à l'arbre de transmission (32) pour ladite au moins une roue du compresseur (34).

8. Turbocompresseur de suralimentation (121) pour un moteur à combustion interne à piston (10),
- le turbocompresseur de suralimentation (121) présentant une entrée d'air frais (24) et une sortie d'air frais (26),
- le turbocompresseur de suralimentation (121) devant être relié au moteur à combustion interne (10) via la sortie d'air frais (26),
- le turbocompresseur de suralimentation (121) présentant un arbre de transmission (32), accouplé à une machine électrique (30), pour au moins une roue de compresseur (34) pour mettre en rotation la roue du compresseur (34) par la machine électrique (30), ce qui met à disposition de l'air frais comprimé pour le moteur à combustion interne (10) au niveau de la sortie d'air frais (26), et
- la machine électrique (30) étant une machine à réluctance,
dans lequel :
- le turbocompresseur de suralimentation (121) présente en supplément une entrée de gaz d'échappement (122) et une sortie de gaz d'échappement (124),
- le turbocompresseur de suralimentation (121) doit être relié au moteur à combustion interne (10) via l'entrée de gaz d'échappement (122), et
- au moins une roue de turbine (130) est agencée sur l'arbre de transmission (32) accouplé à la machine électrique (30), ladite roue étant mise en rotation par un flux de gaz d'échappement en provenance du moteur à combustion interne (10),
**caractérisé en ce que** :
- la machine à réluctance (30) présente un agencement de stator se composant de culasses (50) essentiellement en forme de C, chaque culasse (50) présentant deux bras libres (52, 54) qui dépassent chacun radialement vers l'intérieur aussi loin qu'ils recouvrent au moins partiellement des dents (42) agencées sur les surfaces frontales (46, 48) d'un induit (40) lorsque les dents (42) de l'induit (40) sont en alignement avec les bras (52, 54) des culasses (50).

9. Turbocompresseur de suralimentation selon la revendication 1, **caractérisé en ce qu'**un circuit de pilotage (ECU) est prévu pour la machine électrique (30), qui pilote celle-ci de sorte que, lors d'une basse vitesse de rotation du moteur à combustion interne (10), le turbocompresseur (20, 121) mette à disposition de l'air frais comprimé pour le moteur à combustion interne (10), avec assistance d'un moteur électrique.

10. Turbocompresseur de suralimentation selon la revendication 8, **caractérisé en ce qu'**un circuit de pilotage (ECU) est prévu pour la machine électrique (30), qui pilote celle-ci de sorte que, lors d'une haute vitesse de rotation du moteur à combustion interne (10), la machine électrique (30) travaille comme générateur et fournit de la puissance électrique.
